# EUROPÄISCHE PATENTSCHRIFT

(11) **EP 3 241 766 B1**
(45) Veröffentlichungstag und Bekanntmachung des Hinweises auf die Patenterteilung: **03.07.2019**
(21) Anmeldenummer: 16168027.7
(22) Anmeldetag: 03.05.2016
(51) Int. Cl.: B65B 31/02, B65B 51/14, B65B 57/00, B66F 3/24, B66F 3/30, B65G 15/00, B65B 59/04

(54) **KAMMERBANDMASCHINE**
FLAT BELT MACHINE
MACHINE A BANDE A CHAMBRE

(43) Veröffentlichungstag der Anmeldung: 08.11.2017
(73) Patentinhaber: MULTIVAC Sepp Haggenmüller SE & Co. KG, 87787 Wolfertschwenden (DE)
(72) Erfinder: BRUNNER, Maximilian, 87439 Kempten (DE); HÄRING, Rainer, 87761 Lauben (DE); MÖSSNANG, Konrad, 87439 Kempten (DE)
(74) Vertreter: Grünecker Patent- und Rechtsanwälte PartG mbB

(56) Entgegenhaltungen:
- EP-A1- 2 492 236
- DE-A1-102010 013 889
- US-A- 4 134 501
- US-A1- 2006 252 609

## Beschreibung

Die Erfindung bezieht sich auf eine Verpackungsmaschine in Form einer Kammerbandmaschine gemäß dem Oberbegriff des Anspruchs 1.

Die DE 102010013889 A1 zeigt eine Kammerbandmaschine mit einer Einrichtung zum vertikalen Verstellen eines Kammerdeckels. Dabei ist der Kammerdeckel an vier Säulen angeordnet, die synchron mittels eines motorischen Antriebs und eines Fluidzylinders als Unterstützung bewegt werden.

Die EP 2 492 236 A1 offenbart eine Hubvorrichtung mit einer Sicherheitseinrichtung, die nicht für Kammerbandmaschinen, sondern konkret für Umreifungsmaschinen entwickelt wurde. Dort ist ein Blockadeelement dazu vorgesehen, ein vertikal bewegbares Werkzeug bei Bedarf im Wesentlichen stufenlos in jeder Vertikalposition zu halten.

Aufgabe der Erfindung ist es, eine Kammerbandmaschine bezüglich der Verstellung des Kammerdeckels konstruktiv zu vereinfachen.

Diese Aufgabe wird gelöst durch eine Kammerbandmaschine mit den Merkmalen des Anspruchs 1. Vorteilhafte Weiterbildungen der Erfindung sind in den Unteransprüchen angegeben.

Die erfindungsgemäße Kammerbandmaschine umfasst ein Maschinengestell, einen Kammerdeckel mit zwei Säulen und eine Hubeinrichtung, wobei eine Sicherungseinrichtung für die Hubeinrichtung vorgesehen ist. Die erfindungsgemäße Kammerbandmaschine zeichnet sich dadurch aus, dass die Sicherungseinrichtung eine Rastschiene aufweist, die mit einem Rasthaken an einer Säule zusammenwirkt, um den Kammerdeckel in einer angehobenen Stellung gegen Absinken oder Herabfallen zu sichern, falls die Hubeinrichtung eine Funktionsstörung aufweist, beispielsweise weil die Luftdruckversorgung der Pneumatikzylinder zum Anheben des Kammerdeckels ausfällt, eine innere Leckage im Pneumatikzylinder oder eine Leckage in den Versorgungsleitungen der Pneumatikzylinder vorliegt. Für diesen Fall liegt trotzdem ein sicherer Halt des Kammerdeckels vor und jegliche Gefährdung des Bedienpersonals ist verhindert.

In einer vorteilhaften Ausführung weist die Rastschiene eine Vielzahl von Rastzähnen auf, um zusammen mit dem Rasthaken der Säule eine selbstverstärkende Haltewirkung des Kammerdeckels zu erzeugen.

Vorzugsweise ist die Rastschiene an ihrem ersten Ende schwenkbar am Maschinengestell angeordnet und an ihrem zweiten Ende ist ein Aktor vorgesehen, um die Rastschiene um das erste Ende zu schwenken und die Rastschiene an die Säule bzw. an den Rasthaken hinzuführen, damit der Rasthaken mit einem der Rastzähne in Eingriff kommt und ein Absenken des Kammerdeckels verhindert wird.

Dabei ist der Aktor bevorzugt ein Pneumatikzylinder oder ein motorischer Linearantrieb, um eine einfache Ausführung der Konstruktion zu ermöglichen.

Die Sicherungseinrichtung weist wenigstens einen ersten Sensor auf, um die Haltestellung zu überprüfen, in der der Rasthaken mit der Rastschiene in Eingriff ist, um die höchste Sicherheit gegen die Gefahr eines sich unbeabsichtigt oder unerwartet absenkenden Kammerdeckels zu gewährleisten.

Dabei prüft der Sensor vorzugsweise die Position der Rastschiene oder ist alternativ am Aktor angeordnet, um beispielsweise die Stellung eines Zylinderkolbens oder eines Linearschlittens zu prüfen.

In einer alternativen Ausführung ist der erste oder ein zweiter Sensor vorgesehen, um die geöffnete Stellung der Rastschiene zu überprüfen. Somit ist auch die Funktion einer zwangsgeführten Rückstellung aus einer geöffneten Stellung in die Haltestellung prüfbar, da beide Stellungen über die beiden Sensoren erfassbar sind.

Vorzugsweise weist die Sicherungseinrichtung eine Feder auf, um die Rastschiene in die Haltestellung zu bewegen, so dass eine automatische Rückstellung der Rastschiene in die Haltestellung in einer konstruktiv vorteilhaften Weise vorliegt.

Dabei ist die Feder bevorzugt eine Rückstellfeder innerhalb eines Pneumatikzylinders.

Ein erfindungsgemäßes Verfahren zum Betrieb einer oben beschriebenen Kammerbandmaschine zeichnet sich dadurch aus, dass vor einem Maschinenstart eine Funktionsprüfung erfolgt, wobei der Kammerdeckel in seine oberste Stellung ausgefahren wird, die Sicherungseinrichtung sich in der geöffneten Stellung befindet, und wobei der erste Sensor die geöffnete Stellung überprüft. So kann in Verbindung mit Ventilen, Druckschaltern und entsperrbaren Rückschlagventilen beispielsweise ein Performance Level "d" gemäß EN ISO 13849-1 erreicht werden.

Dabei überprüft bevorzugt der erste Sensor die Stellung des Pneumatikzylinder mittels der Kolbenposition, um darüber die Stellung der Rastschiene zu ermitteln.

Vorzugsweise zeigt im Fehlerfall die Kammerbandmaschine mittels einer Steuerung eine Fehlermeldung an und die Kammerbandmaschine geht nicht in einen Arbeitsbetrieb, da die Sicherheit nicht mehr gewährleistet ist. Es gilt den Fehler zu beheben, bevor mit der Kammerbandmaschine weiter gearbeitet werden kann.

Im Folgenden wird ein vorteilhaftes Ausführungsbeispiel der Erfindung anhand von Zeichnungen näher dargestellt. Im Einzelnen zeigen:
- Fig. 1: eine erfindungsgemäße Kammerbandmaschine,
- Fig. 2: eine schematische Rückansicht der Kammerbandmaschine mit einer Sicherungseinrichtung in Haltestellung und
- Fig. 3: eine schematische Rückansicht der Kammerbandmaschine mit einer Sicherungseinrichtung in geöffneter Stellung.

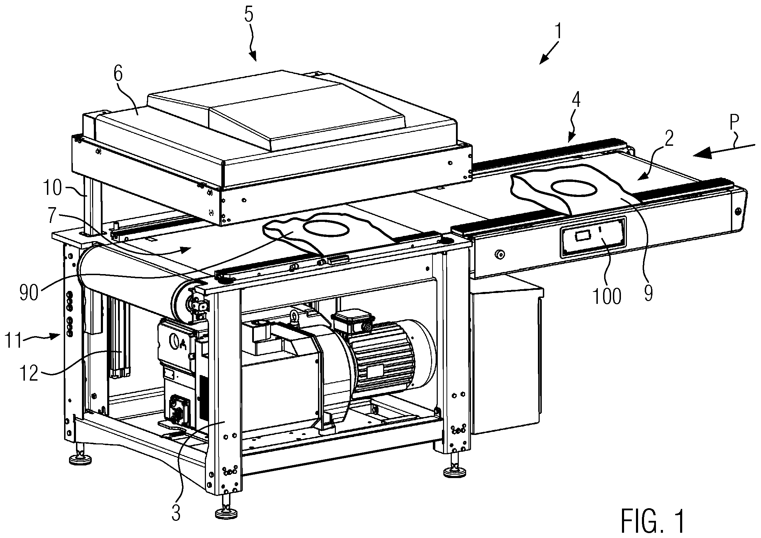

Figur 1 zeigt eine schematische Ansicht einer erfindungsgemäßen Kammerbandmaschine 1 mit einem Förderband 2, einem Maschinengestell 3, einem Auflegebereich 4 und einer Evakuier- und Versiegelungsvorrichtung 5. Die Evakuier- und Versiegelungsvorrichtung 5 weist einen vertikal bewegbaren Kammerdeckel 6 auf, der zusammen mit einem Unterteil 7 eine evakuierbare Kammer bildet. Der Kammerdeckel 6 lässt sich kraftbetrieben automatisch schließen und öffnen, um beispielsweise zu evakuierende und zu versiegelnde Beutel 9 aufzunehmen, die durch das motorisch angetriebene Förderband 2 in einer Produktionsrichtung P automatisch der Evakuier- und Versiegelungsvorrichtung 5 zugeführt werden. Der Beutel 9 mit seinem Produkt wird in der Kammer evakuiert und anschließend im Bereich seiner Beutelöffnung luftdicht gesiegelt, sodass eine Vakuum-Packung 90 hergestellt wird.

Die Kammerbandmaschine 1 umfasst eine Hubeinrichtung 11, wobei der Kammerdeckel 6 über zwei Säulen 10 mittels jeweils eines Pneumatikzylinders 12 vertikal anhebbar und absenkbar ist. Über eine Steuerung 100, die im Auflegebereich 4 angeordnet ist, kann ein Bedienpersonal Einstellungen und den Maschinenstart vornehmen und bekommt Statusmeldungen, beispielsweise Fehlermeldungen, angezeigt.

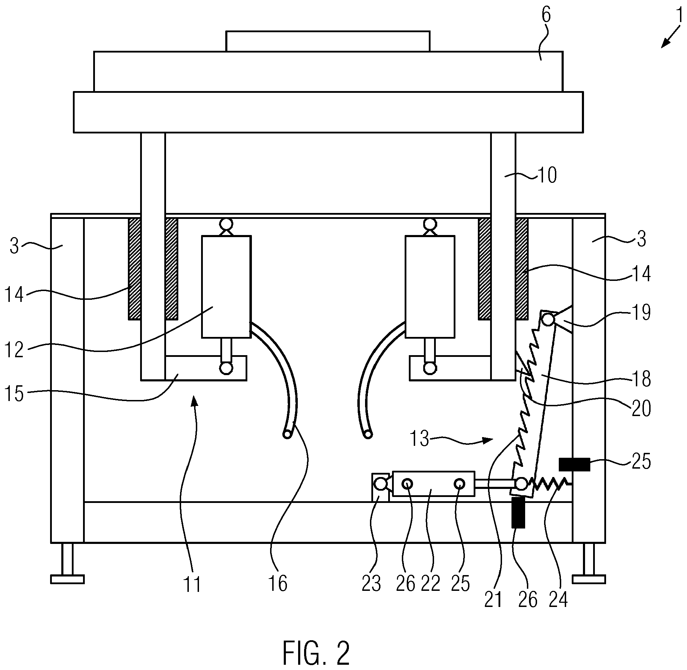

Figur 2 zeigt eine schematische Rückansicht der Kammerbandmaschine 1 mit einer Sicherungseinrichtung 13 für die Hubeinrichtung 11 in Haltestellung. Die zwei Säulen 10 sind über Führungen 14, die mit dem Maschinengestell 3 verbunden sind, geführt und jeweils über einen Pneumatikzylinder 12 bewegbar. Dabei ist der Pneumatikzylinder 12 über eine Strebe 15 mit einem unteren Ende der bewegbaren Säule 10 verbunden. Die Pneumatikzylinder 12 selbst werden wenigstens über eine Druckluftleitung 16 versorgt. Für den Fall, dass beispielsweise eine Leckage entlang der Druckluftleitung 16, eine Leckage im Inneren der Pneumatikzylinder 12 oder ein Ausfall einer Druckluftversorgung für die Pneumatikzylinder 12 auftritt, ist eine Sicherungseinrichtung 13 vorgesehen, um ein für den Maschinenbediener unerwartetes Herabbewegen des Kammerdeckels 6 zu verhindern. Die Sicherungseinrichtung 13 umfasst eine Rastschiene 18, die drehbar über einen Halter 19 am Maschinengestell 3 angebracht ist und mit einem Rasthaken 20, der im unteren Bereich der in Figur 2 gezeigten rechten Säule 10 angebracht ist, zusammenwirkt.

Die Rastschiene 18 weist an ihrer der Säule 10 zugewandten Seite eine Vielzahl von Rastzähnen 21 auf, zwischen denen der Rasthaken 20 eintauchen kann, wenn sich die Rastschiene 18 in ihrer Halteposition befindet, wie in Fig. 2 dargestellt. Die Form der Rastzähne 21 und des Rasthakens 20 ist derart gestaltet, dass beim In-Kontakttreten miteinander die Gewichtskraft des Kammerdeckels 6 eine Arretierung des Rasthakens 20 mit den Rastzähnen 21 noch verstärkt.

Die Schwenkbewegung der Rastschiene 18 erfolgt beispielsweise mittels eines Aktors 22, hier als pneumatischer Stellzylinders 22 gezeigt, der zum Einen mit einem unteren Ende der Rastschiene 18 und zum Anderen über einen weiteren Halter 23 mit dem Maschinerahmen 3 verbunden ist. Eine Druckfeder 24, die sich am Maschinenrahmen 3 abstützt und die Rastschiene 18 in die Haltestellung schwenkt, sodass sich die Rastzähne 21 dem Rasthaken 21 annähern und auch in Kontakt kommen, sorgt für eine Zwangsbewegung der Rastschiene 18 in die Haltestellung selbst im Ausfall des Stellzylinders 22. Anstelle der Druckfeder 24 ist auch ein federrückstellender Pneumatikzylinder als Aktor 22 denkbar.

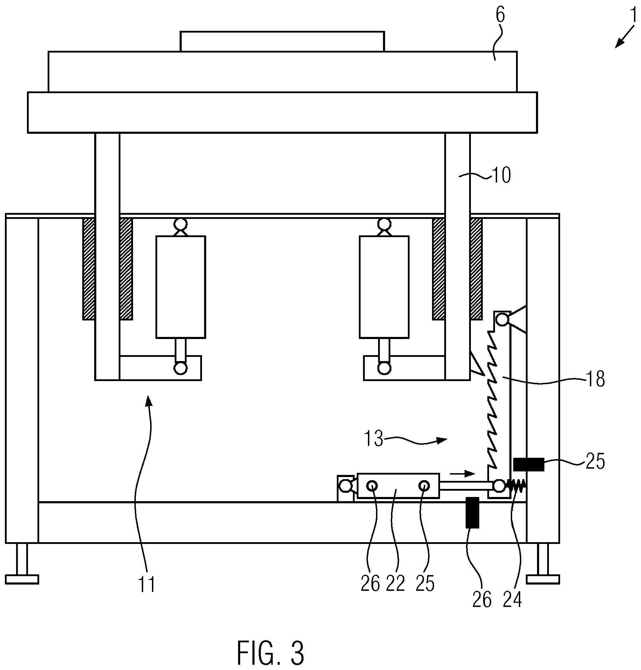

Figur 3 zeigt eine schematische Rückansicht wie Fig. 2 der Kammerbandmaschine 1 mit der Sicherungseinrichtung 13 in geöffneter Stellung, bei der die Rastschiene 18 entgegen dem Uhrzeigersinn weg vom Rasthaken 20 bewegt wurde. Diese Schwenkbewegung wird durch den Aktor 22 in Pfeilrichtung bewirkt. Dabei wird die dargestellte Druckfeder 24 oder die nicht näher dargestellte Rückstellfeder im Inneren des Aktors 22 bzw. des pneumatischen Stellzylinders zusammengedrückt und gespannt. In dieser geöffneten Stellung, nämlich der Reinigungsstellung, kann der Kammerdeckel 6 mittels der Hubeinrichtung 11 wenigstens in eine obere Einlegeposition oder in eine untere Evakuier- und Siegelposition, nämlich die Arbeitsposition, bewegt werden.

Der Betrieb der Kammerbandmaschine 1 sieht einen Funktionstest der Sicherungseinrichtung 13 und im Speziellen der Druckfeder 24 vor jedem Start, nach jedem Einschalten der Kammerbandmaschine 1 oder in zyklischen Abschnitten vor. Dabei wird der Kammerdeckel 6 über die Steuerung 100 in seine oberste Position angehoben, während sich die Sicherungseinrichtung 13 in geöffneter Stellung befindet. Anschließend wird die Sicherungseinrichtung 13 in die Haltestellung gebracht. Um eine oder beide Stellungen überwachen zu können, ist ein erster Sensor 25 vorgesehen, der die geöffnete Stellung erfasst. Optional kann auch noch ein zweiter Sensor 26 vorgesehen sein, um auch die Haltestellung zu erfassen. So können beide Stellungen und auch der Wechsel zwischen beiden Stellungen von der Steuerung 100 sicher erkannt werden. In einer alternativen Ausführungsform können die zwei Sensoren 25, 26 auch am Aktor 22 angeordnet sein, um am Aktor 22 selbst beide Stellungen zu erfassen.

Sollte bei diesem Funktionstest oder auch während des Betriebs der Kammerbandmaschine 1 die Steuerung 100 einen Fehler feststellen, so wird die Kammerbandmaschine 1 angehalten und eine entsprechende Meldung ausgegeben, anhand derer der Maschinenbediener eine Beseitigung des Problems vornehmen kann.

## Patentansprüche

1. Kammerbandmaschine (1), umfassend ein Maschinengestell (3), einen Kammerdeckel (6) mit zwei Säulen (10) und eine Hubeinrichtung (11), wobei eine Sicherungseinrichtung (1) für die Hubeinrichtung (11) vorgesehen ist, **dadurch gekennzeichnet, dass** die Sicherungseinrichtung (13) eine Rastschiene (18) aufweist, die mit einem Rasthaken (20) an wenigstens einer der zwei Säulen (10) zusammenwirkt, und dass die Sicherungseinrichtung (13) wenigstens einen ersten Sensor (25) aufweist, um die geöffnete Stellung der Rastschiene (18) zu überprüfen oder um die Haltestellung zu überprüfen, in der der Rasthaken (20) mit der Rastschiene (18) in Eingriff ist.

2. Kammerbandmaschine nach Anspruch 1, **dadurch gekennzeichnet, dass** die Rastschiene (18) eine Vielzahl von Rastzähnen (21) aufweist.

3. Kammerbandmaschine nach einem der vorangehenden Ansprüche, **dadurch gekennzeichnet, dass** die Rastschiene (18) an ihrem ersten Ende schwenkbar am Maschinegestell (3) angeordnet ist und an ihrem zweiten Ende ein Aktor (22) vorgesehen ist, um die Rastschiene (18) um das erste Ende zu schwenken.

4. Kammerbandmaschine nach Anspruch 3, **dadurch gekennzeichnet, dass** der Aktor (22) ein Pneumatikzylinder oder ein motorischer Linearantrieb ist.

5. Kammerbandmaschine nach einem der vorangehenden Ansprüche, **dadurch gekennzeichnet, dass** der Sensor (25) die Position der Rastschiene (18) prüft oder am Aktor (22) angeordnet ist, um beispielsweise die Stellung eines Zylinderkolbens oder eines Linearschlittens zu prüfen.

6. Kammerbandmaschine nach einem der vorangehenden Ansprüche, **dadurch gekennzeichnet, dass** die Sicherungseinrichtung (13) eine Feder (24), vorzugsweise eine Druckfeder, aufweist, um die Rastschiene (18) in ihre Haltestellung vorzuspannen.

7. Kammerbandmaschine nach Anspruch 6, **dadurch gekennzeichnet, dass** die Feder (24) eine Rückstellfeder innerhalb eines Pneumatikzylinders (22) ist.

8. Verfahren zum Betrieb einer Kammerbandmaschine (1) gemäß einem der vorangehenden Ansprüche, **dadurch gekennzeichnet, dass** vor einem Maschinenstart der Kammerbandmaschine (1) eine Funktionsprüfung erfolgt, wobei der Kammerdeckel (6) in seine oberste Stellung ausgefahren wird, die Sicherungseinrichtung (13) sich in der geöffneten Stellung befindet, und wobei der erste Sensor (25) die geöffnete Stellung überprüft.

9. Verfahren nach Anspruch 8, **dadurch gekennzeichnet, dass** der erste Sensor (25) die Stellung des Pneumatikzylinders (22) mittels der Kolbenposition überprüft.

10. Verfahren nach Anspruch 8 oder 9, **dadurch gekennzeichnet, dass** im Fehlerfall die Kammerbandmaschine (1) mittels einer Steuerung (100) eine Fehlermeldung anzeigt und die Kammerbandmaschine (1) nicht in Arbeitsbetrieb geht.

## Claims

1. A chamber conveyor belt machine (1) comprising a machine frame (3), a chamber cover (6) with two columns (10) and a lifting device (11), wherein a safety system (13) is provided for the lifting device (11), **characterized in that** the safety system (13) has a latching rail (18), which cooperates with a latching hook (20) at at least one of the two columns (10), and **in that** the safety system (13) has at least one first sensor (25) in order to verify the open position of the latching rail (18) or in order to verify the holding position, in which the latching hook (20) engages the latching rail (18).

2. The chamber conveyor belt machine according to claim 1, **characterized in that** the latching rail (19) has a plurality of latching teeth (21).

3. The chamber conveyor belt machine according to one of the preceding claims, **characterized in that** the latching rail (18) at its first end is arranged so as to be pivotable on the machine frame (3) and at its second end, an actuator (22) is provided in order to pivot the latching rail (18) about the first end.

4. The chamber conveyor belt machine according to claim 3, **characterized in that** the actuator (22) is a pneumatic cylinder or a motorized linear drive.

5. The chamber conveyor belt machine according to one of the precedent claims, **characterized in that** the sensor (25) verifies the position of the latching rail (18) or is arranged on the actuator (22) in order, for example, to check the position of a cylinder piston or a linear carriage.

6. The chamber conveyor belt machine according to one of the preceding claims, **characterized in that** the safety system (13) has a spring (24), preferably a pressure spring, in order to pretension the latching rail (18) into its holding position.

7. The chamber conveyor belt machine according to claim 6, **characterized in that** the spring (24) is a resetting spring within the pneumatic cylinder (22).

8. A method for operating a chamber conveyor belt machine (1) according to one of the preceding claims, **characterized in that** a functional test is carried out before a machine start of the chamber conveyor belt machine (1), wherein the chamber cover (6) is extended into its uppermost position, the safety system (13) is in the open position, and wherein the first sensor (25) verifies the open position.

9. The method according to claim 8, **characterized in that** the first sensor (25) verifies the position of the pneumatic cylinder (22) by means of the piston position.

10. The method according to claim 8 or 9, **characterized in that** in the event of a failure, the chamber conveyor belt machine (1) displays an error message by means of a control (100) and the chamber conveyor belt machine (1) does not enter into the operation mode.

## Revendications

1. Machine à tapis et chambre (1), comprenant un bâti de machine (3), un couvercle de chambre (6) avec deux montants (10) et un dispositif de soulèvement (11), un dispositif de sécurité (13) étant prévu pour le dispositif de soulèvement (11),
**caractérisée en ce que** le dispositif de sécurité (13) comprend un rail d'encliquetage (18), qui interagit avec un cliquet d'encliquetage (20) sur au moins l'un des deux montants (10), et **en ce que** le dispositif de sécurité (13) présente au moins un premier capteur (25) pour vérifier la position ouverte du rail d'encliquetage (18), ou bien pour vérifier la position de maintien dans laquelle le cliquet d'encliquetage (20) est en prise avec le rail d'encliquetage (18).

2. Machine à tapis et chambre selon la revendication 1, **caractérisée en ce que** le rail d'encliquetage (18) comporte un grand nombre de dents d'encliquetage (21).

3. Machine à tapis et chambre selon l'une des revendications précédentes, **caractérisée en ce que** le rail d'encliquetage (18) est agencé, à sa première extrémité, de manière pivotante sur le bâti de machine (3), et il est prévu, à sa deuxième extrémité, un actionneur (22) pour assurer le pivotement du rail d'encliquetage (18) autour de la première extrémité.

4. Machine à tapis et chambre selon la revendication 3, **caractérisée en ce que** l'actionneur (22) est un vérin pneumatique ou un entraînement linéaire motorisé.

5. Machine à tapis et chambre selon l'une des revendications précédentes, **caractérisée en ce que** le capteur (25) vérifie la position du rail d'encliquetage (18) ou bien est agencé sur l'actionneur (22), pour, par exemple, vérifier la position d'un piston de vérin ou d'un chariot linéaire.

6. Machine à tapis et chambre selon l'une des revendications précédentes, **caractérisée en ce que** le dispositif de sécurité (13) comprend un ressort (24), de préférence un ressort de compression, destiné à précontraindre le rail d'encliquetage (18) dans sa position de maintien.

7. Machine à tapis et chambre selon la revendication 6, **caractérisée en ce que** le ressort (24) est un ressort de rappel à l'intérieur d'un vérin pneumatique (22).

8. Procédé pour assurer le fonctionnement d'une machine à tapis et chambre (1) selon l'une des revendications précédentes, **caractérisé en ce qu'**avant un démarrage-machine de la machine à tapis et chambre (1), est effectuée une vérification de fonctionnement, le couvercle de chambre (6) étant déplacé dans sa position la plus relevée, le dispositif de sécurité (13) se trouvant dans la position ouverte, et le premier capteur (25) vérifiant la position ouverte.

9. Procédé selon la revendication 8, **caractérisé en ce que** le premier capteur (25) vérifie la position du vérin pneumatique (22) au moyen de la position du piston.

10. Procédé selon la revendication 8 ou la revendication 9, **caractérisé en ce que** dans le cas d'un défaut, la machine à tapis et chambre (1) affiche un message d'erreur au moyen d'une commande (100), et la machine à tapis et chambre (1) ne passe pas en mode de fonctionnement de travail.
